# EUROPÄISCHE PATENTSCHRIFT

(11) **EP 2 958 242 B1**
(45) Veröffentlichungstag und Bekanntmachung des Hinweises auf die Patenterteilung: **25.07.2018**
(21) Anmeldenummer: 15164681.7
(22) Anmeldetag: 22.04.2015
(51) Int. Cl.: H04B 1/16, H04B 1/00

(54) **VERFAHREN UND VORRICHTUNG ZUM VERARBEITEN EINES RUNDFUNKSIGNALS**
METHOD AND DEVICE FOR PROCESSING A BROADCAST SIGNAL
DISPOSITIF ET PROCÉDÉ DE TRAITEMENT D'UN SIGNAL RADIO

(30) Priorität: 20.06.2014 DE 102014211830
(43) Veröffentlichungstag der Anmeldung: 23.12.2015
(73) Patentinhaber: ROBERT BOSCH GMBH, 70442 Stuttgart (DE)
(72) Erfinder: Erben, Peter, 30926 Seelze (DE); Nyenhuis, Detlev, 31079 Sibbesse (DE); Risse, Marcus, 31139 Hildesheim (DE)

(56) Entgegenhaltungen:
- EP-A1- 1 719 058
- EP-A2- 1 062 783
- US-A1- 2008 240 300

## Beschreibung

### Stand der Technik

Die vorliegende Erfindung bezieht sich auf ein Verfahren zum Verarbeiten eines Rundfunksignals, auf eine entsprechende Vorrichtung sowie auf ein entsprechendes Computerprogramm.

Rundfunkempfänger auf der Basis digitaler Signalverarbeitung für die Modulationsarten AM oder FM werden heute "samplebasiert" realisiert. Das bedeutet, dass beim Eintreffen jedes neuen Abtastwerts eine Signalverarbeitung gestartet wird. Das Eintreffen neuer Werte und die Ausführung der Verarbeitungsschritte erfolgen synchron. Führt die Empfängerkontrollsoftware zum Beispiel eine Frequenzverstimmung des Hochfrequenzteils des Empfängers durch, so ist die Auswirkung (beispielsweise die Änderung einer Signalfeldstärke) unmittelbar verfügbar. Weiter können die Empfangsqualität verbessernde Maßnahmen nicht rückwirkend erfolgen.

Die Signalverarbeitung für analoge Modulationsstandards wie z. B. AM und FM und die Signalverarbeitung für digitale Modulationsstandards wie z. B. DAB oder DRM erfolgt nicht parallel auf derselben Recheneinheit (Digitaler Signalprozessor oder Mikrocontroller).

Die Druckschrift US 2008/240300 A1 offenbart ein Verfahren zur Verarbeitung von abnormalen Modulationssignalen und einen Empfänger, der eine Kompensationsfunktion für abnormale Modulationssignale aufweist.

Die Druckschrift EP 1 062 783 A2 offenbart eine Off-line-Breitband-Netzwerk-Schnittstelle.

Die Druckschrift EP 1 719 058 A1 offenbart einen elektronischen Datenstromverarbeitungsschaltkreis mit lokal überwachten Parameter-Updates und ein Verfahren zum Entwerfen eines solchen Schaltkreises.

### Offenbarung der Erfindung

Vor diesem Hintergrund werden mit dem hier vorgestellten Ansatz ein Verfahren zum Verarbeiten eines Rundfunksignals, weiterhin eine Vorrichtung, die dieses Verfahren verwendet sowie schließlich ein entsprechendes Computerprogramm gemäß den Hauptansprüchen vorgestellt. Vorteilhafte Ausgestaltungen ergeben sich aus den jeweiligen Unteransprüchen und der nachfolgenden Beschreibung.

Vorliegend wird ein Verfahren zum Verarbeiten eines Rundfunksignals vorgestellt, wobei das Verfahren die folgenden Schritte aufweist:
- Einlesen eines Datenblocks, der eine Mehrzahl von Datenwerten aufweist, die je einem Wert eines zu einem vordefinierten Zeitpunkt abgetasteten Rundfunksignals entsprechen;
- Analysieren der Mehrzahl von Datenwerten des Datenblocks, um einen Verarbeitungsparameter zu ermitteln; und
- Demodulieren jedes Datenwertes des Datenblocks mittels einer von dem Verarbeitungsparameter abhängigen Verarbeitungsvorschrift, um das Rundfunksignal zu verarbeiten.

Unter einem Rundfunksignal kann ein drahtlos übertragenes Signal verstanden werden, welches von einem zentralen Sender an mehrere vom Sender entfernt angeordnete Empfangsgeräte abgestrahlt wird, wobei eine Kommunikation von den Empfangsgeräten zurück zum Sender nicht vorgesehen ist. Unter einem Datenblock kann eine Abfolge von zeitlich aufeinanderfolgenden Abtastwerten oder hier von abgeleiteten Werten (Datenwerte) des Rundfunksignals verstanden werden. Unter einem Demodulieren kann eine Extraktion von einer Information aus den jeweiligen (einzeln bzw. separat verarbeiteten) Datenwerten verstanden werden, wobei diese Extraktion unter Verwendung der Verarbeitungsvorschrift als Demodulationsvorschrift erfolgt.

Der hier vorgestellte Ansatz basiert auf der Erkenntnis, dass das Rundfunksignal besonders gut verarbeitet werden kann, wenn nicht ausschließlich jeder Abtastwert, d. h. jeder Datenwert, isoliert von einem anderen betreffenden Abtastwert verarbeitet wird, sondern wenn zunächst mehrere Datenwerte eines Datenblocks zusammen analysiert werden und in Abhängigkeit von diesem Analysieren (d. h. in Abhängigkeit von dem Verarbeitungsparameter) eine entsprechend geeignete Verarbeitungsvorschrift zum Demodulieren der einzelnen Datenwerte verwendet wird. Hierdurch lassen sich beispielsweise impulsartige Fehler oder Störungen oder Fehler oder Störungen, die über einen längeren Zeitraum andauern und in den (abgetasteten) Datenwerten enthalten sind durch die Analyse des Datenblocks erkennen, sodass beispielsweise unterschiedliche Datenblöcke (evtl. sogar einzelne Datenwerte eines Datenblocks) mit unterschiedlichen Verarbeitungsvorschriften verarbeitet werden. Beispielsweise kann für einen ersten Datenblock, bei dem eine hohe Dämpfung des Rundfunksignals erkannt wird eine erste Verarbeitungsvorschrift verwendet werden, die eine entsprechende Verstärkung der Datenwerte repräsentiert, während für einen zweiten Datenblock, bei dem eine besonders hohe Dämpfung des Rundfunksignals erkannt wird, eine solche entsprechende Verstärkung der Datenwerte nicht erforderlich ist. Auf diese Weise lassen sich zeitlich veränderliche Parameter bei der Verarbeitung des Rundfunksignals deutlich besser erkennen, als dies bei der Verwendung der herkömmlichen Verarbeitung des Rundfunksignals auf der Basis jedes einzelnen Abtastwertes möglich ist.

Der hier vorgestellte Ansatz bietet somit den Vorteil, die Verarbeitung eines Rundfunksignals deutlich zu verbessern, da gegenüber den herkömmlichen Ansätzen Zusammenhänge zwischen den einzelnen Abtastwerten durch die Analyse des Datenblocks erkannt und zur Verbesserung der Auswertung der Datenwerte verwendet werden können und hierdurch eine deutlich verbesserte Verarbeitung des Rundfunksignals möglich ist. Zugleich erfordert der hier vorgestellte Ansatz lediglich eine geringe Erhöhung des schaltungstechnisch oder numerischen Aufwandes, da bei den meisten modernen Rundfunk-Signalverarbeitungseinheiten bereits digitale Auswertungsschaltungen vorhanden sind, die lediglich geringfügig umkonfiguriert werden müssen.

Günstig ist auch eine Ausführungsform des hier vorgestellten Ansatzes, bei dem im Schritt des Demodulierens auf die einzelnen Datenwerte des Datenblockes als Verarbeitungsvorschrift ein (beispielsweise einzeln bzw. separat auszuführendes) Demodulationsverfahren angewandt wird. Insbesondere kann dabei das Demodulationsverfahren ein analoges Demodulationsverfahren, ein Amplituden-Demodulationsverfahren und/oder ein Frequenz-Demodulationsverfahren repräsentieren. In diesem Zusammenhang sei darauf hingewiesen, dass vorliegend als analoges Demodulationsverfahren ein Verfahren verwendet werden kann, welches zwar digitalisierte Abtastwerte (oder davon abgeleitete Werte) verwendet, in diesem Fall hierauf aber ein analoges Demodulationsverfahren anwendet. Ein analoges Demodulationsverfahren im eigentlichen bzw. herkömmlichen Sinne stellt diese Vorgehensweise zwar nicht dar, jedoch wird im Folgenden eine solche Verarbeitung von digitalisierten Werten eines Rundfunksignals mit einem analogen Demodulationsverfahren als analoge Demodulation bezeichnet. Eine solche Ausführungsform des vorgestellten Ansatzes bietet den Vorteil, dass auch bei der Verwendung oder Verarbeitung des gesamten Datenblocks noch ein herkömmliches ausgereiftes und somit technisch sehr einfaches Demodulationsverfahren angewendet wird. Zugleich kann die einzelne Verarbeitung der Datenwerte technisch sehr schnell erfolgen, sodass die Verarbeitung des Rundfunksignals gemäß dem hier vorgestellten Ansatz lediglich eine geringe Erhöhung der Verarbeitungszeit aufweisen.

Gemäß einer weiteren Ausführungsform des hier vorgestellten Ansatzes kann im Schritt des Analysierens der Verarbeitungsparameter derart ermittelt werden, dass er eine Information über den Zusammenhang zwischen den Datenwerten und/oder eine Eigenschaft von mehreren Datenwerten des Datenblocks repräsentiert. Ein solcher Zusammenhang kann beispielsweise eine Information über den Zustand und/oder die Eigenschaften des Übertragungskanals des Rundfunksignals, eine zeitvariante Störung wie beispielsweise eine Impulsstörung oder dergleichen sein. Eine derartige Ausführungsform des hier vorgestellten Ansatzes bietet den Vorteil der Erkennung von Informationen aus den abgetasteten Rundfunksignalwerten, die eine deutliche Verbesserung der Erkennung der im Rundfunksignal erhaltenen Informationen ermöglicht und die durch die Abtastwert-weise Verarbeitung des Rundfunksignal gemäß dem Stand der Technik nicht nutzbar ist.

Auch kann in einer weiteren Ausführungsform des hier vorgeschlagenen Ansatzes im Schritt des Demodulierens in Abhängigkeit vom Verarbeitungsparameter zumindest eine erste und/oder eine zweite Verarbeitungsvorschrift auf die Datenwerte angewandt werden, um das Rundfunksignal zu verarbeiten. Die erste und zweite Verarbeitungsvorschrift können sich beispielsweise darin unterscheiden, dass zwar ein gleicher Verarbeitungsalgorithmus jedoch mit unterschiedlichen Verarbeitungsparametern verwendet wird, oder dass der Verarbeitungsalgorithmus selbst in den beiden Verarbeitungsvorschriften unterschiedlich ausgestaltet ist. Eine solche Ausführungsform des hier vorgeschlagenen Ansatzes bietet den Vorteil, unterschiedliche Verarbeitungsvorschriften je nach erkanntem Verarbeitungsparameter zu verwenden, um das Rundfunksignal möglichst präzise auswerten zu können. Durch die Flexibilität der Verwendung von unterschiedlichen Verarbeitungsvorschriften je nach Verarbeitungsparameter im betreffenden Datenblock (d. h. also für unterschiedliche Datenblöcke) lässt sich dabei eine Verbesserung in der Auswertungsmöglichkeit des empfangenen Rundfunksignals gegenüber dem Stand der Technik erreichen.

Denkbar ist ferner auch eine Ausführungsform des hier vorgestellten Ansatzes, bei dem im Schritt des Demodulierens nach und/oder während einer Ausführung einer ersten Verarbeitungsvorschrift zumindest eine zweite Verarbeitungsvorschrift auf die Datenwerte des Datenblocks angewandt wird, um das Rundfunksignal zu verarbeiten. Insbesondere können hierbei Verarbeitungswerte als Ergebnis der Anwendung der ersten oder zweiten Verarbeitungsvorschrift ausgegeben werden, die einem vorbestimmten Kriterium entsprechen. Eine solche Ausführungsform des hier vorgestellten Ansatzes bietet den Vorteil bei zur Verfügung stehender Rechenleistung in dem Datenblock enthaltenen Datenwerte möglichst präzise und genau auswerten zu können, um möglichst viele und genaue Informationen aus dem Rundfunksignal extrahieren zu können. Die Auswahl der Ergebnisse des hier vorgeschlagenen Verfahrens kann beispielsweise durch das vorbestimmte Kriterium, beispielsweise ein möglichst hohes Signal-zu-Rausch-Verhältnis bestimmt werden.

Technisch sehr effizient umsetzbar ist eine Ausführungsform des hier vorgeschlagenen Ansatzes, bei dem im Schritt des Einlesens Datenwerte eines Datenblocks aus einem Ringspeicher eingelesen werden. Dabei kann der Ringspeicher insbesondere eine Speicherkapazität von zumindest zwei Datenblöcken aufweisen. Eine solche Ausführungsform des hier vorgeschlagenen Ansatzes bietet den Vorteil, ein technisch ausgereiftes und einfach einsetzbares Element zu verwenden, um den kontinuierlichen Datenstrom beim Abtasten des Rundfunksignals zu puffern und zu einem Datenblock zusammenzusetzen. Insbesondere durch die Wahl des Ringspeichers mit einer Speicherkapazität von zumindest zwei Datenblöcken lässt sich ferner sicherstellen, dass während der Verarbeitung eines Datenblocks bereits die Abtastwerte des Rundfunksignal zu einem nachfolgenden Datenblock vollständig und korrekt aufgezeichnet werden können, sodass bei der nachfolgenden Verarbeitung auf der Basis der jeweils gewählten Verarbeitungsvorschrift möglichst kein Fehler durch einen unbeabsichtigten Verlust von Datenwerten auftritt.

In einer weiteren Ausführungsform des hier vorgestellten Ansatzes weist das Verfahren einen Schritt des Abspeicherns der Datenwerte in einem Speicher auf, wobei eine die Frequenz des abgetasteten Rundfunksignals repräsentierende Frequenzinformation den Datenwerten zugeordnet und abgespeichert wird und wobei im Schritt des Demodulierens die Datenwerte mittels der Verarbeitungsvorschrift in Abhängigkeit von der Frequenzinformation demoduliert werden. Eine solche Ausführungsform des hier vorgestellten Ansatzes bietet den Vorteil, dass bereits eine Information, beispielsweise über einen Wechsel oder eine Veränderung der Frequenz in der Frequenzauswertung oder der Abtastung des Rundfunksignals zur Verfügung steht, sodass eine weitere zeitnahe Verbesserung bei der Auswertung des Rundfunksignals möglich ist. Auf diese Weise braucht der Wechsel der Änderung der Frequenz in der Frequenzauswertung oder der Abtastung nicht erst in der Analyse des Datenblocks erkannt werden, sondern kann bereits als vorab bekannter (zusätzlicher) Verarbeitungsparameter im Schritt des Demodulierens verwendet werden, sodass die Verarbeitung der Datenblocks schneller und/oder präziser erfolgen kann.

Besonders günstig ist eine Ausführungsform des hier vorgestellten Ansatzes mit einem Schritt des Vorverarbeitens des Rundfunksignals zum Erhalt der einzelnen Datenwerte vor dem Einlesen, wobei beim Vorverarbeiten eine Auswahl einer zum Empfang des Rundfunksignals verwendete Empfangsantenne und/oder eine Mischung des Rundfunksignals und/oder eine Analog/Digital-Umsetzung und/oder eine Verstärkung und/oder Filterung des Rundfunksignals oder eines davon abgeleiteten Signals erfolgt. Eine solche Ausführungsform der vorliegenden Erfindung bietet den Vorteil, durch die Vorverarbeitung des Rundfunksignals zeitnah auf Störungen im Rundfunksignal reagieren zu können, die bereits aus der Analyse der einzelnen Abtastwerte erkennbar sind. Beispielsweise kann bei einem abrupten Abbruch der Empfangsfeldstärke der Wechsel auf eine andere Empfangsantenne eingeleitet werden, sodass die Datenwerte aus einem möglichst aussagekräftigen und starken empfangenen Rundfunksignal (d. h. einem Signal mit einem hohen Signal-Rausch-Abstand) gewonnen und weiterverarbeitet werden können.

Günstig ist ferner eine Ausführungsform des hier vorgestellten Ansatzes in der Form einer Vorrichtung zum Verarbeiten eines Rundfunksignals, wobei die Vorrichtung die folgenden Merkmale aufweist:
- eine Schnittstelle zum Einlesen eines Datenblocks, der eine Mehrzahl von Datenwerten aufweist, die je einem Wert eines zu einem vordefinierten Zeitpunkt abgetasteten Rundfunksignals entsprechen;
- eine Einheit zum Analysieren der Mehrzahl von Datenwerten des Datenblocks, um einen Verarbeitungsparameter zu ermitteln; und
- eine Einheit zum Demodulieren jedes Datenwertes des Datenblocks mittels einer von dem Verarbeitungsparameter abhängigen Verarbeitungsvorschrift, um das Rundfunksignal zu verarbeiten.

Der hier vorgestellte Ansatz schafft somit eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Unter einer Vorrichtung kann vorliegend ein elektrisches Gerät verstanden werden, das Sensorsignale verarbeitet und in Abhängigkeit davon Steuer- und/oder Datensignale ausgibt. Die Vorrichtung kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen der Vorrichtung beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird. Somit wird vorliegend auch ein Computerprogramm vorgestellt, das dazu eingerichtet ist, alle Schritte eines Verfahrens gemäß einem der hier vorgestellten Varianten durchzuführen. Auch wird ein maschinenlesbares Speichermedium mit einem darauf gespeicherten Computerprogramm nach einer hier vorgestellten Ausführungsform vorgeschlagen.

Der hier vorgestellte Ansatz wird nachstehend anhand der beigefügten Zeichnungen beispielhaft näher erläutert. Es zeigen:
Fig. 1 ein Blockschaltbild einer Vorrichtung zur Verarbeitung eines Rundfunksignals gemäß einem Ausführungsbeispiel der vorliegenden Erfindung;
Fig. 2 ein Blockschaltbild des Aufbaus einer Blockverarbeitungseinheit;
Fig. 3 ein Diagramm, in der eine Gegenüberstellung des Rechenaufwandes der samplebasierten Signalverarbeitung gemäß dem herkömmlichen Ansatz und einer blockbasierten Signalverarbeitung wiedergegeben ist;
Fig. 4 ein Blockschaltbild von Komponenten eines Ausführungsbeispiels der vorliegenden Erfindung;
Fig. 5 Blockschaltbild von Komponenten eines Ausführungsbeispiels der vorliegenden Erfindung;
Fig. 6 unterschiedliche Diagramme, in denen die Wirkung bzw. das Ergebnis eines Ausführungsbeispiels der hier vorgestellten Erfindung den herkömmlichen Vorgehensweisen über die Zeit gegenübergestellt ist; und
Fig. 7 ein Ablaufdiagramm eines Verfahrens gemäß einem Ausführungsbeispiel der vorliegenden Erfindung

In der nachfolgenden Beschreibung günstiger Ausführungsbeispiele der vorliegenden Erfindung werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

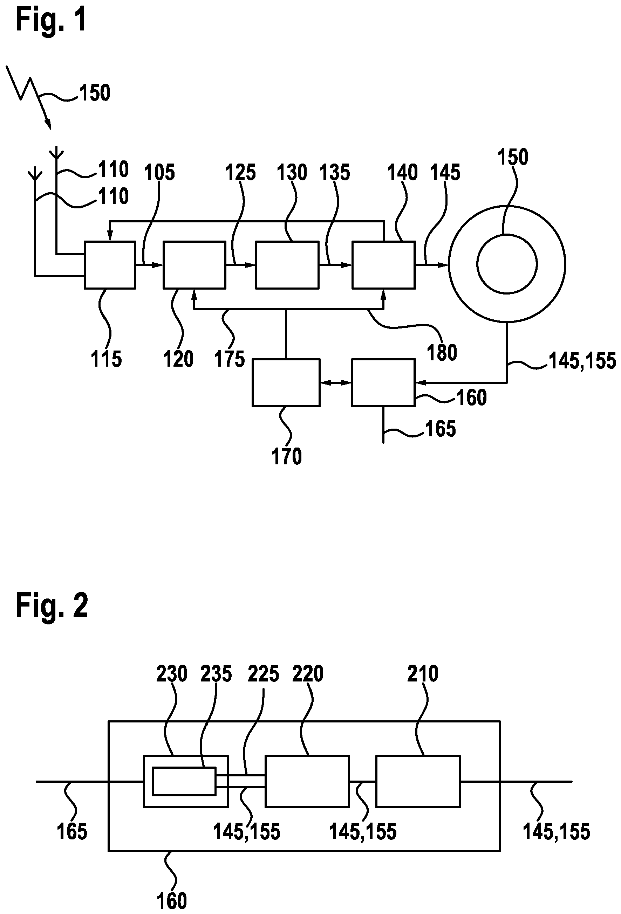

Fig. 1 zeigt ein Blockschaltbild einer Vorrichtung 100 zur Verarbeitung eines Rundfunksignals 105 gemäß einem Ausführungsbeispiel der vorliegenden Erfindung. Das Rundfunksignal 105 wird hierbei von einer von mehreren Antennen 110 empfangen, die von einem Antennenwahlschalter 115 entsprechend als Empfangsantenne ausgewählt ist. Das von der entsprechenden Antenne 110 empfangene Rundfunksignal 105 wird nachfolgend in einer HF-Verarbeitungseinheit 120 (HF = Hochfrequenz) einer HF-Verarbeitung unterzogen, beispielsweise einer Mischung mit der entsprechenden Trägerfrequenz, um ein Zwischenfrequenz- oder Basisbandsignal zu erhalten. Das aus der HF-Verarbeitungseinheit 120 erhaltene Signal 125 wird in einem A/D-Wandler 130 digitalisiert, wobei das hieraus erhaltene digitalisierte Signal 135 einer Verarbeitung auf der Basis der individuellen Abtastwerte des Signals 135 erfolgt. Durch eine solche Abtastwert-basierte ("sample-basierte") Verarbeitung in einer Abtastwerteverarbeitungseinheit 140 kann sehr zeitnah erkannt werden, dass beispielsweise ein von der jeweils ausgewählten Antenne 110 empfangenes Signal fehlerhaft oder stark gestört ist. Zur Verbesserung eines auszuwertenden empfangenen Rundfunksignals 105 kann nun durch die Abtastwerteverarbeitungseinheit 140 beispielsweise der Antennenwahlschalter 115 derart angesteuert werden, dass eine andere der Antennen 110 zum Empfang und Weiterleitung des Rundfunksignals 105 ausgewählt wird, die beispielsweise an einer anderen Position aufgestellt ist und somit andere , günstigerweise bessere Empfangseigenschaften für den Empfang des Rundfunksignals aufweist.

Die von der Abtastwerteverarbeitungseinheit 140 bereitgestellten Abtastwerte des (herunter-gemischten) Rundfunksignals werden nachfolgend als Datenwerte 145 in einen Ringspeicher 150 eingeschrieben. Aus diesem Ringspeicher 150 werden dann jeweils Datenblöcke 155, die eine vordefinierte Anzahl von Datenwerten 145 enthalten in eine Block-Verarbeitungseinheit 160 eingelesen. In dieser Blockverarbeitungseinheit 160 werden nachfolgend näher beschriebene Schritte in entsprechend ausgebildeten Einheiten ausgeführt, um das Rundfunksignal 105 auf der Basis einer "block-basierten" Verarbeitung zu verarbeiten und eine im Rundfunksignal 105 enthaltene zu extrahierende Information 165 bereitzustellen. Weiterhin können in der Blockverarbeitungseinheit 160 bzw. einer entsprechenden Steuer-Software 170 Steuersignale generiert werden, die in der HF-Verarbeitungseinheit 120 und/oder der Abtastwerteverarbeitungseinheit 140 eingelesen werden und in den betreffenden Einheiten die Verarbeitung und/oder Umformung des Rundfunksignals 105 oder des davon abgeleiteten Signals steuern. Beispielsweise kann durch die Blockverarbeitungseinheit 160 an die HF-Verarbeitungseinheit ein Steuersignal 175 an die HF-Verarbeitungseinheit 120 übertragen werden, dass eine Mischung des von der entsprechenden Antenne 110 erhaltenen Rundfunksignals 105 mit einer anderen Trägerfrequenz zu mischen ist, um beispielsweise eine geringfügige Frequenzverschiebung bei der Verarbeitung des Rundfunksignals 105 kompensieren zu können. Auch denkbar ist beispielsweise ein Steuersignal 180 von der Steuersoftware 170 an die Abtastwerteverarbeitungseinheit 140, um beispielsweise eine temporäre Verstärkung der im Signal 135 vorliegenden abgetasteten (gemischten) Rundfunksignalwerte zu erreichen, die dann als Datenwerte 145 in den Ringspeicher einzuschreiben sind.

Fig. 2 zeigt ein Blockschaltbild des Aufbaus einer Blockverarbeitungseinheit 160. Die Blockverarbeitungseinheit 160 umfasst eine Schnittstelle 210 zum Einlesen eines Datenblocks 155, der eine Mehrzahl von Datenwerten 145 aufweist, die je einem Wert eines zu einem vordefinierten Zeitpunkt abgetasteten Rundfunksignals 105 entsprechen. Weiterhin umfasst die Blockverarbeitungseinheit 160 eine Einheit 220 zum Analysieren der Mehrzahl von Datenwerten 145 des Datenblocks 155, um einen Verarbeitungsparameter 225 zu ermitteln. Schließlich umfasst die Blockverarbeitungseinheit 160 eine Einheit 230 zum Demodulieren jedes Datenwertes 145 des Datenblocks 155 mittels einer von dem Verarbeitungsparameter 225 abhängigen Verarbeitungsvorschrift 235, um das Rundfunksignal 105 zu verarbeiten.

Für Rundfunkempfänger deren Funktionen vollständig in Software realisiert werden sollen (Software Defined Radio =SDR oder Software Based Receiver =SBR) ist es dabei vorteilhaft, wenn die Signalverarbeitung für digitale Modulationsarten und analoge Modulationsarten auf derselben Recheneinheit abgearbeitet werden können. Aufgrund des Systemkonzepts sollte die Verarbeitung für digitale Modulationsarten gemäß den Ausführungsbeispielen der hier vorgestellten Erfindung "blockbasiert" erfolgen. Das bedeutet, es wird zunächst eine festgelegte Anzahl von Abtastwerten 145 in einen Speicher 150 geschrieben die dann zu einem bestimmten Zeitpunkt komplett (in der Blockverarbeitungseinheit 160) verarbeitet werden. Die benötigte Zeit für die Verarbeitung ist dabei im Mittel kleiner als die Dauer der Speicherung der zu verarbeitenden Abtastwerte 145. Um die Recheneinheit (Blockverarbeitungseinheit 160) optimal auszulasten, ist es besonders vorteilhaft, auch die Signalverarbeitung für die analogen Modulationsarten "blockbasiert" auszuführen. Die Länge des Eingangsspeichers 150 für die jeweiligen Abtastwerte 145 sollte sich dabei in einer ähnlichen Größenordnung bewegen (z. B. n*8 ms).

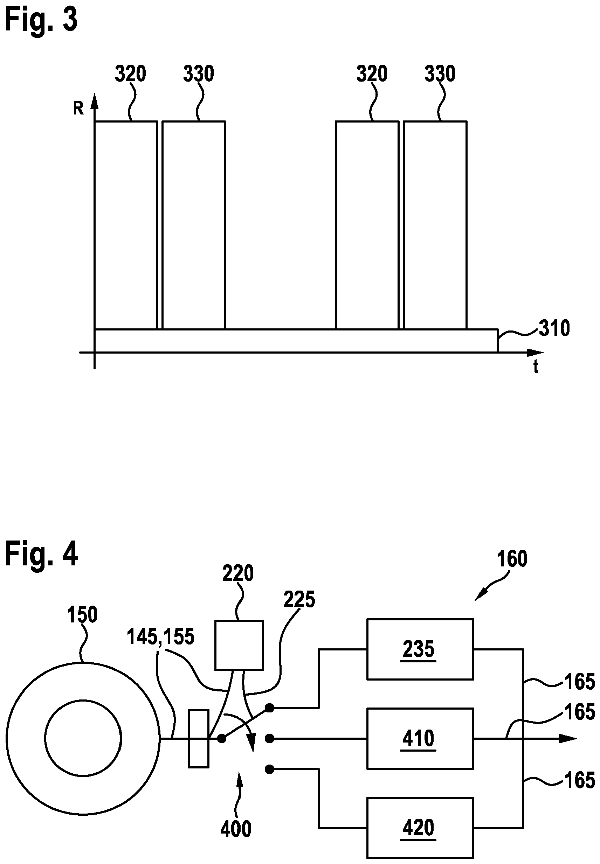

Fig. 3 zeigt ein Diagramm in dem eine Gegenüberstellung des Rechenaufwandes der samplebasierten Signalverarbeitung 310 gemäß dem herkömmlichen Ansatz und einer blockbasierten Signalverarbeitung (beispielsweise unter Verwendung eines DAB-Verarbeitungsalgorithmus 320 oder eines FM-Verarbeitungsalgorithmus 330 als Verarbeitungsalgorithmus 235) dargestellt werden. Auf der Ordinate des Diagramms ist die erforderliche Rechenleistung R eingetragen, wobei auf der Abszisse der Zeitverlauf t wiedergegeben ist. Wie aus dem Diagramm der Fig. 3 erkennbar ist, erfordert die "samplebasierte" Signalverarbeitung 310 kontinuierlich wenig Rechenleistung, während die abwechselnde Ausführung des DAB-Verarbeitungsalgorithmus 320 oder des FM-Verarbeitungsalgorithmus 330 als Verarbeitungsalgorithmus 235 deutlich mehr Rechenleistung erfordert, die jedoch in modernen Signalverarbeitungskomponenten wie digitalen Signalprozessoren oder Mikrocontrollern keine größere Problematik darstellt.

In den vorgestellten Ausführungsbeispielen der vorliegenden Erfindung ist ein Empfangssystem für analoge und digitale Modulationsarten offenbart, bei dem die Signalverarbeitung der analogen Modulationsarten wie auch die Verarbeitung der digitalen Modulationsarten "blockbasiert" erfolgt. Hierdurch ist eine einfache Implementierung beider Signalverarbeitungen auf einer Recheneinheit möglich. Außerdem kann die zur Verfügung stehende Rechenleistung optimal ausgenutzt werden. Ein wichtiger Vorteil des hier vorgestellten Ansatzes besteht darin, dass Signalwiedergabeverbesserungsalgorithmen realisiert werden können, die bei "samplebasierter" Verarbeitung nicht realisierbar sind. So kann die Beurteilung (Analyse) eines kompletten (Daten-) Blocks 155 erfolgen und anschließend entschieden werden, ob eine Verarbeitung erneut, gegebenenfalls mit anderen Parametern 225, durchgeführt werden sollte.

In der Beschreibung des Ausführungsbeispiels aus der Fig. 1 ist beispielsweise der hier vorgestellte Ansatz anhand eines FM-Empfängers grob offenbart. In der folgenden Beschreibung soll eine detailliertere Offenbarung des Ausführungsbeispiels aus Fig. 1 erfolgen. Insbesondere wird hier das empfangene HF-Signal (Rundfunksignal 105) einer Empfangsantenne 110 einer HF-Verarbeitungseinheit 120 zugeführt, in der Verarbeitungsschritte wie z. B. Verstärkung und Mischung des HF-Signals 105 erfolgen.

Anschließend wird das Signal 125 an einen Analog/Digital-Umsetzer 130 weitergeleitet. Die HF-Verarbeitungseinheit 120 kann auch als sogenannter Breitbandwandler ausgeführt sein, bei dem nach einer Bandfilterung komplette Frequenzbereiche mit mehreren Sendern analog/digital gewandelt werden. Die Ausgangswerte 135 (Abtastwerte) des Analog/Digital-Umsetzers 130 liegen mit einer festen Abtastrate vor, d. h. in jeder Zeiteinheit (beispielsweise x ns) liegt ein neuer Abtastwert 135 vor. In einer samplebasierten Verarbeitungseinheit 140 werden diese Abtastwerte 135 verarbeitet, z. B. gefiltert und in der Abtastrate dezimiert. Weiter werden in dieser samplebasierten Verarbeitungseinheit 140 Funktionen ausgeführt, die keine blockbasierte Verarbeitung zulassen. Hierzu gehört z. B. die Steuerung eines Antennenschalters 115 (zur Realisierung oder Umsetzung einer Antennendiversity).

In einem weiteren samplebasierten Verarbeitungsschritt werden die verarbeiteten Abtastwerte (Datenwerte 145) mittels eines Schreibzeigers in einen Ringspeicher 150 geschrieben. Die Länge des Ringspeichers 150 ist beispielsweise abhängig von der Blocklänge der folgenden blockbasierten Verarbeitung, von der verwendeten Abtastrate und vom zeitlichen Jitter des Aufrufs der blockbasierten Verarbeitung. Wird beispielsweise von einer Blocklänge von 8 ms und einer Abtastrate von 400 kHz ausgegangen, so fallen pro Block und Signal mindestens 8 ms*400 kHz = 3200 Werte (Datenwerte 145) an. Sind die Werte 145 eines kompletten Blocks 155 in den Ringspeicher 150 geschrieben, so können diese über einen Lesezeiger ausgelesen und verarbeitet werden. Während dieser Zeit werden über den Schreibzeiger weitere neue Werte 145 in den Ringspeicher 150 geschrieben. Das Auslesen und die Verarbeitung der Werte eines Blocks 155 sollten im Mittel schneller erfolgen, als das Beschreiben eines kompletten Blocks 155. Im Normalfall ist das Auslesen und Verarbeiten eines Blocks 155 deutlich schneller als das samplebasierte Beschreiben desselben. Die Länge des Ringspeichers 150 sollte mindestens zwei Blocklängen betragen.

Falls über die Empfängerkontrollsoftware 170 z. B. eine Frequenzverstellung der HF-Verarbeitung in der HF-Verarbeitungseinheit 120 vorgenommen wird, ändern sich die in den Ringspeicher 150 zu schreibenden Werte 145 unverzüglich. Die die Empfangsqualität anzeigenden Größen wie z. B. Empfangsfeldstärke oder Störinformationen stehen allerdings noch nicht zur Verfügung, da diese erst durch die Bearbeitung eines Blocks 155 ermittelt werden. Besonders vorteilhaft ist es, die Aktionen der Empfängerkontrollsoftware 170 mit dem Schreiben der Werte 145 in den Ringspeicher 150 zu synchronisieren. So wird z. B. nach dem kompletten Beschreiben eines Blocks 155 des Ringspeichers 150 ein Signal ausgegeben, mit dem Aktionen der Empfängerkontrollsoftware 170 gestartet werden die Einstellungen der HF-Verarbeitung in der HF-Verarbeitungseinheit 120 betreffen.

Weiter beinhaltet der Ringspeicher 150 hier beispielsweise zusätzlich zu den Speichern für die Eingangswerte als den Datenwerten 145 einen Speicher für Statusinformationen. Wird über die Empfängerkontrollsoftware 170 beispielsweise eine Frequenzverstellung der HF-Verarbeitung in der HF-Verarbeitungseinheit 120 durchgeführt, so wird diese Frequenzinformation in das Statussignal des Ringspeichers 150 geschrieben. Mithilfe dieses Statussignals, das zu jedem Wert 145 im Ringspeicher 150 vorliegt, kann im Rahmen der Blockverarbeitung in der Blockverarbeitungseinheit 160 entschieden werden, wie die entsprechenden Werte 145 weiterverarbeitet werden sollten. So kann beispielsweise abhängig von der Statusinformation entschieden werden, ob die Werte 145 an eine Signalverarbeitungsvariante 1, 2 oder n weitergeleitet werden.

Fig. 4 zeigt ein Blockschaltbild von Komponenten eines solchen Ausführungsbeispiels der vorliegenden Erfindung. Hierbei kann in der Blockverarbeitungseinheit 160 in der Einheit 220 zum Analysieren eine Analyse der Datenwerte 145 des eingelesenen Datenblocks 155 erfolgen und hieraus ein Verarbeitungsparameter 225 gewonnen werden. Der Verarbeitungsparameter 225 kann dann beispielsweise zur Steuerung eines Schalters 400 verwendet werden, um einen von mehreren Signalverarbeitungsvarianten oder Verarbeitungsalgorithmen 235, 410, 420 auszuwählen.

Gemäß einem weiteren Ausführungsbeispiel der vorliegenden Erfindung können während eines sogenannten Alternativfrequenztests, bei dem die HF-Verarbeitung in der HF-Verarbeitungseinheit 120 für eine kurze Zeit auf eine Alternativfrequenz gestellt werden, die Werte so einer separaten Signalverarbeitungsvariante 410 bzw. 420 zugeführt werden, deren Ergebnis 165 (Information) anschließend von der Empfängerkontrollsoftware 170 ausgewertet werden kann. Diese Verwendung der separaten Signalverarbeitungsvariante 410 bzw. 420 hat den Vorteil, die Signalverarbeitungswerte der alternativen Frequenz von den Signalverarbeitungswerten der aktuellen Hörfrequenz des Rundfunksignals 105 zu trennen. Weiter können die Parameter der Signalverarbeitungsvarianten 235, 410 bzw. 420 auf die jeweiligen Anwendungsfälle optimiert werden.

Wird über die Auswertung der Statusinformationen entschieden verschiedene Signalverarbeitungsvarianten 235, 410 bzw. 420 zu verwenden, sollte dafür Sorge getragen werden, dass die Signalspeicher für die in den unterschiedlichen Signalverarbeitungsvarianten verwendeten Datenblöcken 155 gleiche Längen aufweisen. Dieses kann dadurch erfolgen, dass beispielsweise gemäß einer Variante einer in der Blockverarbeitungseinheit 160 verwendeten Verarbeitungsvorschrift vorherige Werte vervielfacht werden oder dass eine entsprechende Anzahl definierter Werte eingefügt wird. Zusätzlich zur Auswahl der Signalverarbeitung bzw. der verwendeten Verarbeitungsvorschrift in der Blockverarbeitungseinheit 160 in Abhängigkeit des Statussignals können mehrere Signalverarbeitungsalternativen 235, 410 oder 420 für einen Block 155 parallel realisiert werden. Nach der Verarbeitung eines kompletten Blocks 155 wird (beispielsweise unter Verwendung eines vorbestimmten Kriteriums) entschieden, welche Signalverarbeitung bzw. welche Verarbeitungsvorschrift 235, 410 oder 420 das bessere Ergebnis 165 liefert. Dieses Ergebnis 165 wird dann an weitere Verarbeitungseinheiten weitergeleitet.

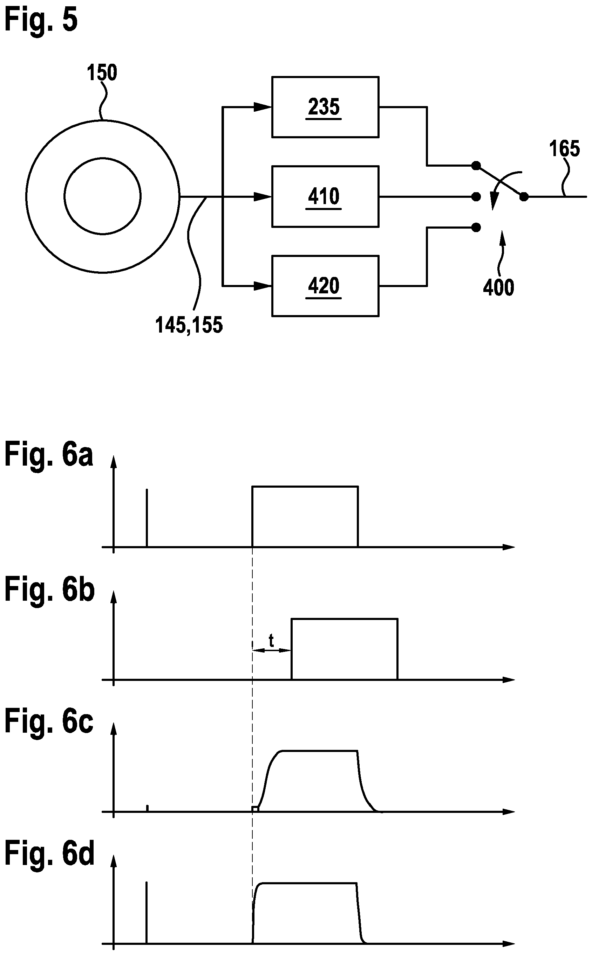

Fig. 5 zeigt ein Blockschaltbild von Komponenten eines solchen Ausführungsbeispiels der vorliegenden Erfindung, bei dem eine solche parallele Verarbeitung der Datenwerte 145 eines Datenblocks 155 unter Verwendung von unterschiedlichen Verarbeitungsvorschriften 235, 410 oder 420 wiedergegeben ist.

Alternativ oder zusätzlich kann auch nach der Abarbeitung einer Signalverarbeitungsvariante 235, 410 oder 420 für einen Block 155 entschieden werden, ob das Ausgangssignal 165 hinreichend gut ist oder die Berechnung bzw. die Ausführung eines der Verarbeitungsvorschriften 235, 410 oder 420 erneut mit einer anderen Parametrierung durchgeführt werden sollte. In diesem Fall werden die Signalverarbeitungsvarianten 235, 410 oder 420 nicht immer parallel ausgeführt, sondern nur bei Bedarf.

Diese Funktionalität wird beispielsweise für die Selektionsfilterung des FM-Signals 105 als Rundfunksignal verwendet. Wird bei der Verarbeitung eines Blocks 155 detektiert, dass Störungen durch einen Nachbarkanal vorliegen, so wird beispielsweise die Verarbeitung des Datenblocks in der Blockverarbeitungseinheit 160 erneut mit einer schmaleren Einstellung eines Selektionsfilters in einer der Datenverarbeitungsvorschriften 235, 410 oder 420 durchgeführt. Alternativ kann auch eine Vorverarbeitung des Rundfunksignals 105 in der HF-Verarbeitungseinheit 120, dem A/D-Wandler 130 und/oder der Abtastwerteverarbeitungseinheit 140 derart erfolgen, dass die Bereitstellung der Datenwerte unter Anwendung einer schmaleren Einstellung eines Selektionsfilters zur Trennung von Frequenzen (beispielsweise in der HF-Verarbeitungseinheit 120) erfolgt. Eine Wiederholung der Bearbeitung kann so lange erfolgen, bis ein neuer Block 155 von Daten 145 komplett beschrieben ist und verarbeitet werden sollte. Wird eine Signalverarbeitung für einen Block von Abtastwerten 135 verarbeitet, so ergibt sich eine gewisse Anzahl von Ausgangswerten 145 der Signalverarbeitung in der Abtastwerteverarbeitungseinheit 140. Diese Ausgangswerte 145 können dabei mit derselben Abtastrate wie die Abtastwerte 135 anfallen oder aber mit einer reduzierten Abtastrate.

Die Ausgangswerte 145 werden ebenfalls in einen Ringspeicher 150 geschrieben, um für weitere Verarbeitungsschritte zur Verfügung zu stehen.

Jedes System, das von einer Blockverarbeitung für analoge Rundfunkstandards Gebrauch macht, führt zu einer zeitlichen Verzögerung des Audiosignals, der die Empfangsqualität anzeigenden Größen, des RDS-Signals, sowie aller weiteren Ausgangssignale des Empfängers.

Ein System bei dem die Blockverarbeitung für analoge Rundfunkstandards Anwendung findet, sollte über einen ausreichend großen Speicher verfügen. Die Unterteilung in samplebasierte Verarbeitung und blockbasierte Verarbeitung kann ferner dazu verwendet werden, dass zusätzlich zu den oben angegebenen Aspekten ein Antennenschaltsignal ohne zeitliche Verzögerung generiert wird.

Mittels der Blockverarbeitung in der Blockverarbeitungseinheit 160 sind Empfangsverbesserungen möglich, die ohne Blockverarbeitung nicht realisiert werden können. So sind durch die Analyse eines ganzen Blocks 155 von Daten 145 andere Reaktionen auf z. B. impulsartige oder sprungartige Störungen möglich, als diese bei samplebasierten durchgeführt werden können. Die Reaktion auf Empfangsstörungen oder Änderungen der Empfangsqualität kann bei einer blockweisen Verarbeitung bereits zeitlich vor der Änderung erfolgen. Fig. 6 zeigt unterschiedliche Diagramme, in denen die Wirkung bzw. das Ergebnis eines Ausführungsbeispiels der hier vorgestellten Erfindung den herkömmlichen Vorgehensweisen über die Zeit gegenübergestellt ist. Dabei ist in dem Diagramm der Teilfigur 6a der Verlauf eines Eingangssignals als Rundfunksignal 105 dargestellt. In der Teilfigur 6b ist das Ausgangssignal 165 bei einem blockverarbeitenden System gemäß einem Ausführungsbeispiel der vorliegenden Erfindung vorgestellt. Dabei ist eine Kompensation des Impulses zu erkennen, jedoch tritt auch eine Verzögerung t bei der Ausgabe des Ergebnissignals 165 auf. In der Teilfigur 6c ist das Ausgangssignal bei einem samplebasierten System mit Unterdrückung des Impulses und Fehlreaktion beim Sprung gemäß einer herkömmlichen Vorgehensweise dargestellt. In der Teilfigur 6d ist ein Ausgangssignal bei einem samplebasierten System ohne Unterdrückung des Impulses ebenfalls gemäß einer herkömmlichen Vorgehensweise dargestellt.

Die zeitliche Verzögerung t ist ein notwendiger Bestandteil der hier vorgeschlagenen Blockverarbeitung. Eine minimale/maximale zeitliche Verzögerung ist allerdings schwerlich anzugeben, da diese von der verwendeten Blocklänge abhängt. Zusätzlich ist auch die unterschiedliche Behandlung von impulsartigen und sprungartigen Eingangssignalen bei dem hier vorgeschlagenen Ansatz gegenüber herkömmlichen Ansätzen zu erkennen. Während ein blockbasiertes System eine Signalanalyse über einen längeren Zeitraum durchführen kann und so impulsartige von sprungartigen Eingangssignalen unterscheiden kann, ist diese Unterscheidung bei einem herkömmlichen samplebasierten System nicht möglich. Hier kommt es entweder zu Fehlreaktionen oder die gewünschten Reaktionen (im Beispiel unten das Unterdrücken des Impulses) finden nicht statt.

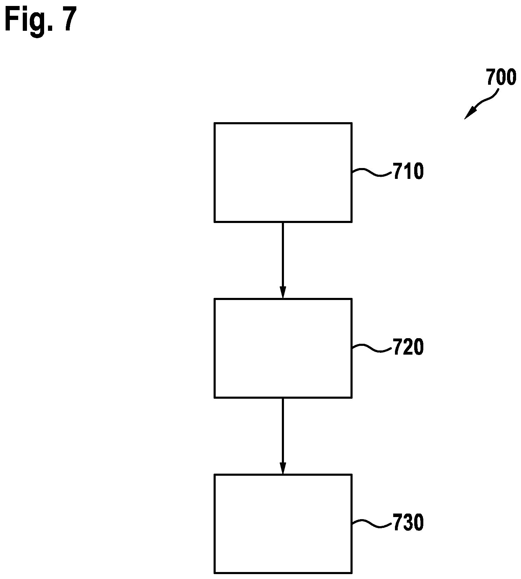

Fig. 7 zeigt ein Ablaufdiagramm eines Ausführungsbeispiels der vorliegenden Erfindung als Verfahren 700 zum Verarbeiten eines Rundfunksignals. Das Verfahren 700 umfasst einen Schritt 710 des Einlesens eines Datenblocks, der eine Mehrzahl von Datenwerten aufweist, die je einem Wert eines zu einem vordefinierten Zeitpunkt abgetasteten Rundfunksignals entsprechen. Ferner umfasst das Verfahren 700 einen Schritt 720 des Analysierens der Mehrzahl von Datenwerten des Datenblocks, um einen Verarbeitungsparameter zu ermitteln.

Schließlich umfasst das Verfahren 700 einen Schritt 730 des Demodulierens jedes Datenwertes des Datenblocks mittels einer von dem Verarbeitungsparameter abhängigen Verarbeitungsvorschrift, um das Rundfunksignal zu verarbeiten.

Ferner können die hier vorgestellten Verfahrensschritte wiederholt sowie in einer anderen als in der beschriebenen Reihenfolge ausgeführt werden.

Umfasst ein Ausführungsbeispiel eine "und/oder"-Verknüpfung zwischen einem ersten Merkmal und einem zweiten Merkmal, so ist dies so zu lesen, dass das Ausführungsbeispiel gemäß einer Ausführungsform sowohl das erste Merkmal als auch das zweite Merkmal und gemäß einer weiteren Ausführungsform entweder nur das erste Merkmal oder nur das zweite Merkmal aufweist.

## Patentansprüche

1. Verfahren (700) zum Verarbeiten eines Rundfunksignals (105), wobei das Verfahren (700) die folgenden Schritte aufweist:
- Einlesen (710) eines Datenblocks (155), der eine Mehrzahl von Datenwerten (145) aufweist, die je einem Wert eines zu einem vordefinierten Zeitpunkt abgetasteten Rundfunksignals (105) entsprechen;
- Analysieren (720) der Mehrzahl von Datenwerten (145) des Datenblocks (155), um einen Verarbeitungsparameter (225) zu ermitteln; und
- Demodulieren (730) jedes Datenwertes (145) des Datenblocks (155) mittels einer von dem Verarbeitungsparameter (225) abhängigen Verarbeitungsvorschrift (235,410, 420), um das Rundfunksignal (105) zu verarbeiten.
**dadurch gekennzeichnet, dass**
im Schritt des Demodulierens (730) nach oder während einer Ausführung einer ersten Verarbeitungsvorschrift (235) zumindest eine zweite Verarbeitungsvorschrift (410, 420) auf die Datenwerte (145) des Datenblocks (155) angewandt wird, um das Rundfunksignal (105) zu verarbeiten.

2. Verfahren (700) gemäß Anspruch 1, **dadurch gekennzeichnet, dass** im Schritt des Demodulierens (730) auf die einzelnen Datenwerte (145) des Datenblockes als Verarbeitungsvorschrift (235,410, 420) ein Demodulationsverfahren angewandt wird.

3. Verfahren (700) gemäß einem der vorangegangenen Ansprüche,
**dadurch gekennzeichnet, dass** im Schritt des Analysierens (720) der Verarbeitungsparameter (225) derart ermittelt wird, dass er eine Information über den Zusammenhang zwischen den Datenwerten (145) oder eine Eigenschaft von mehreren Datenwerten (145) des Datenblocks (155) repräsentiert.

4. Verfahren (700) gemäß einem der vorangegangenen Ansprüche,
**dadurch gekennzeichnet, dass** im Schritt des Demodulierens (730) in Abhängigkeit vom Verarbeitungsparameter (225) zumindest eine erste (235) oder eine zweite Verarbeitungsvorschrift (410, 420) auf die Datenwerte (145) angewandt wird, um das Rundfunksignal (105) zu verarbeiten.

5. Verfahren (700) gemäß einem der vorangegangenen Ansprüche,
**dadurch gekennzeichnet, dass** im Schritt des Demodulierens (730) Verarbeitungswerte (165) als Ergebnis der Anwendung der ersten (235) oder zweiten (410. 420) Verarbeitungsvorschrift ausgegeben wurden, die einem vorbestimmten Kriterium entsprechen.

6. Verfahren (700) gemäß einem der vorangegangenen Ansprüche,
**dadurch gekennzeichnet, dass** im Schritt des Einlesens (710) Datenwerte (145) eines Datenblocks (155) aus einem Ringspeicher (150) eingelesen werden.

7. Verfahren (700) gemäß einem der vorangegangenen Ansprüche,
**gekennzeichnet, durch** einen Schritt des Abspeicherns der Datenwerte (145) in einem Speicher.

8. Verfahren (700) gemäß einem der vorangegangenen Ansprüche,
**gekennzeichnet, durch** einen Schritt des Vorverarbeitens des Rundfunksignals (105) zum Erhalt der einzelnen Datenwerte (145) vor dem Einlesen, wobei beim Vorverarbeiten eine Auswahl einer zum Empfang des Rundfunksignals (105) verwendete Empfangsantenne (110) oder eine Mischung (120) des Rundfunksignals (105) oder eine Analog/Digital-Umsetzung (130) oder eine Verstärkung und/oder Filterung des Rundfunksignals (105) oder eines davon abgeleiteten Signals (125, 135) erfolgt.

9. Vorrichtung (160) zum Verarbeiten eines Rundfunksignals (105), wobei die Vorrichtung (160) die folgenden Merkmale aufweist:
- eine Schnittstelle (210) zum Einlesen (710) eines Datenblocks (155), der eine Mehrzahl von Datenwerten (145) aufweist, die je einem Wert eines zu einem vordefinierten Zeitpunkt abgetasteten Rundfunksignals (105) entsprechen;
- eine Einheit (220) zum Analysieren (720) der Mehrzahl von Datenwerten (145) des Datenblocks (155), um einen Verarbeitungsparameter (225) zu ermitteln; und
- eine Einheit (230) zum Demodulieren (730) jedes Datenwertes (145) des Datenblocks (155) mittels einer von dem Verarbeitungsparameter (225) abhängigen Verarbeitungsvorschrift (235, 410, 420), um das Rundfunksignal (105) zu verarbeiten **dadurch gekennzeichnet, dass**
die Einheit (230) zum Demodulieren (730) ausgebildet ist, um nach oder während einer Ausführung einer ersten Verarbeitungsvorschrift (235) zumindest eine zweite Verarbeitungsvorschrift (410, 420) auf die Datenwerte (145) des Datenblocks (155) anzuwenden, um das Rundfunksignal (105) zu verarbeiten.

10. Computerprogramm, das dazu eingerichtet ist, alle Schritte eines Verfahrens (700) gemäß einem der vorangegangen Ansprüche 1 bis 8 durchzuführen.

11. Maschinenlesbares Speichermedium mit einem darauf gespeicherten Computerprogramm nach Anspruch 10.

## Claims

1. Method (700) for processing a broadcast radio signal (105), wherein the method (700) has the following steps:
- reading in (710) a data block (155) that has a plurality of data values (145) that are each consistent with a value of a broadcast radio signal (105) sampled at a predefined time;
- analysing (720) the plurality of data values (145) of the data block (155) in order to ascertain a processing parameter (225); and
- demodulating (730) each data value (145) of the data block (155) by means of a processing specification (225), 410, 420) that is dependent on the processing parameter (225), in order to process the broadcast radio signal (105),
**characterized in that**
the demodulating step (730) involves at least one second processing specification (410, 420) being applied to the data values (145) of the data block (155) after or during execution of a first processing specification (235), in order to process the broadcast radio signal (105).

2. Method (700) according to Claim 1, **characterized in that** the demodulating step (730) involves a demodulation method being applied to the individual data values (145) of the data block as a processing specification (235, 410, 420).

3. Method (700) according to either of the preceding claims, **characterized in that** the analysing step (720) involves the processing parameter (225) being ascertained such that it represents a piece of information about the relationship between the data values (145) or a property of multiple data values (145) of the data block (155).

4. Method (700) according to one of the preceding claims, **characterized in that** the demodulating step (730) involves the processing parameter (225) being taken as a basis for applying at least one first (235) or one second (410, 420) processing specification to the data values (145), in order to process the broadcast radio signal (105).

5. Method (700) according to one of the preceding claims, **characterized in that** the demodulating step (730) involves processing values (165) having been output as the result of the application of the first (235) or second (410, 420) processing specification, which processing values are consistent with a predetermined criterion.

6. Method (700) according to one of the preceding claims, **characterized in that** the reading-in step (710) involves data values (145) of a data block (155) being read in from a ring memory (150).

7. Method (700) according to one of the preceding claims, **characterized by** a step of storing the data values (145) in a memory.

8. Method (700) according to one of the preceding claims, **characterized by** a step of preprocessing the broadcast radio signal (105) to obtain the individual data values (145) before the reading-in, wherein the preprocessing involves selection of a reception antenna (110) used to receive the broadcast radio signal (105) or mixing (120) of the broadcast radio signal (105) or analogue/digital conversion (130) or amplification and/or filtering of the broadcast radio signal (105) or of a signal (125, 135) derived therefrom being performed.

9. Apparatus (160) for processing a broadcast radio signal (105), wherein the apparatus (160) has the following features:
- an interface (210) for reading in (710) a data block (155) that has a plurality of data values (145) that are each consistent with a value of a broadcast radio signal (105) sampled at a predefined time;
- a unit (220) for analysing (720) the plurality of data values (145) of the data block (155) in order to ascertain a processing parameter (225); and
- a unit (230) for demodulating (730) each data value (145) of the data block (155) by means of a processing specification (235, 410, 420) that is dependent on the processing parameter (225), in order to process the broadcast radio signal (105),
**characterized in that**
the unit (230) is configured for demodulating (730) in order to apply at least one second processing specification (410, 420) to the data values (145) of the data block (155) after or during execution of a first processing specification (235), in order to process the broadcast radio signal (105).

10. Computer program set up to perform all the steps of a method (700) according to one of the preceding Claims 1 to 8.

11. Machine-readable storage medium having a computer program according to Claim 10 stored thereon.

## Revendications

1. Procédé (700) de traitement d'un signal de radiodiffusion (105), le procédé (700) comprenant les étapes suivantes :
- chargement (710) d'un bloc de données (155) qui possède une pluralité de valeurs de données (145), lesquelles correspondent chacune à une valeur d'un signal de radiodiffusion (105) échantillonné à un instant prédéfini ;
- analyse (720) de la pluralité de valeurs de données (145) du bloc de données (155) afin de déterminer un paramètre de traitement (225) ; et
- démodulation (730) de chaque valeur de données (145) du bloc de données (155) au moyen d'une prescription de traitement (235, 410, 420) dépendante du paramètre de traitement (225) afin de traiter le signal de radiodiffusion (105),
**caractérisé en ce que**
à l'étape de démodulation (730), après ou pendant une exécution d'une première prescription de traitement (235), au moins une deuxième prescription de traitement (410, 420) est appliquée aux valeurs de données (145) du bloc de données (155) afin de traiter le signal de radiodiffusion (105).

2. Procédé (700) selon la revendication 1, **caractérisé en ce qu'**à l'étape de démodulation (730), un procédé de démodulation est appliqué en tant que prescription de traitement (235, 410, 420) sur les valeurs de données (145) individuelles du bloc de données.

3. Procédé (700) selon l'une des revendications précédentes, **caractérisé en ce qu'**à l'étape d'analyse (720), le paramètre de traitement (225) est déterminé de telle sorte qu'il représente une information à propos d'une relation entre les valeurs de données (145) ou une propriété de plusieurs valeurs de données (145) du bloc de données (155).

4. Procédé (700) selon l'une des revendications précédentes, **caractérisé en ce qu'**à l'étape de démodulation (730), au moins une première (235) ou une deuxième prescription de traitement (410, 420), en fonction du paramètre de traitement (225), est appliquée aux valeurs de données (145) afin de traiter le signal de radiodiffusion (105).

5. Procédé (700) selon l'une des revendications précédentes, **caractérisé en ce qu'**à l'étape de démodulation (730), les valeurs de traitement (165) qui ont été délivrées en tant que résultat de l'application de la première (235) ou de la deuxième prescription de traitement (410. 420) correspondent à un critère prédéfini.

6. Procédé (700) selon l'une des revendications précédentes, **caractérisé en ce qu'**à l'étape de chargement (710), les valeurs de données (145) d'un bloc de données (155) sont chargées depuis une mémoire circulaire (150).

7. Procédé (700) selon l'une des revendications précédentes, **caractérisé par** une étape d'enregistrement des valeurs de données (145) dans une mémoire.

8. Procédé (700) selon l'une des revendications précédentes, **caractérisé par** une étape de prétraitement du signal de radiodiffusion (105) en vue d'obtenir les valeurs de données (145) individuelles avant le chargement, une sélection d'une antenne de réception (110) utilisée pour la réception du signal de radiodiffusion (105) ou un mélange (120) du signal de radiodiffusion (105) ou une conversion analogique/numérique (130) ou une amplification et/ou un filtrage du signal de radiodiffusion (105) ou d'un signal (125, 135) qui en est dérivé étant effectués lors du prétraitement.

9. Dispositif (160) de traitement d'un signal de radiodiffusion (105), le dispositif (160) possédant les caractéristiques suivantes :
- une interface (210) servant au chargement (710) d'un bloc de données (155) qui possède une pluralité de valeurs de données (145), lesquelles correspondent chacune à une valeur d'un signal de radiodiffusion (105) échantillonné à un instant prédéfini ;
- une unité (220) servant à l'analyse (720) de la pluralité de valeurs de données (145) du bloc de données (155) afin de déterminer un paramètre de traitement (225) ; et
- une unité (230) servant à la démodulation (730) de chaque valeur de données (145) du bloc de données (155) au moyen d'une prescription de traitement (235, 410, 420) dépendante du paramètre de traitement (225) afin de traiter le signal de radiodiffusion (105),
**caractérisé en ce que**
l'unité (230) servant à la démodulation (730) est configurée pour, après ou pendant une exécution d'une première prescription de traitement (235), appliquer au moins une deuxième prescription de traitement (410, 420) aux valeurs de données (145) du bloc de données (155) afin de traiter le signal de radiodiffusion (105).

10. Programme informatique qui est conçu pour exécuter toutes les étapes d'un procédé (700) selon l'une des revendications 1 à 8.

11. Support d'enregistrement lisible par machine sur lequel est enregistré un programme informatique selon la revendication 10.
